# EUROPÄISCHE PATENTSCHRIFT

(11) **EP 2 800 233 B1**
(45) Veröffentlichungstag und Bekanntmachung des Hinweises auf die Patenterteilung: **16.11.2016**
(21) Anmeldenummer: 14157472.3
(22) Anmeldetag: 03.03.2014
(51) Int. Cl.: B60L 3/00, B60L 3/04, H02M 3/335, H02J 5/00, B60L 11/18, H02J 7/02

(54) **Schaltungsanordnung mit einem Resonanzwandler und Verfahren zum Betreiben eines Resonanzwandlers**
Circuit arrangement with a resonance converter and method for operating a resonance converter
Circuit doté d'un convertisseur de courant résonant et procédé de fonctionnement d'un convertisseur de courant résonant

(30) Priorität: 30.04.2013 DE 102013207883
(43) Veröffentlichungstag der Anmeldung: 05.11.2014
(73) Patentinhaber: Siemens Aktiengesellschaft, 80333 München (DE)
(72) Erfinder: Müller, Glenn, 09113 Chemnitz (DE); Rupf, Stephan, 09236 Claussnitz (DE)

(56) Entgegenhaltungen:
- EP-A1- 1 432 097
- EP-A2- 0 758 153
- EP-A2- 0 982 831
- EP-A2- 1 962 403
- EP-A2- 2 079 144
- WO-A1-94/28560
- WO-A1-2012/058466
- DE-A1-102008 027 126
- JP-A- 2006 230 032
- US-A1- 2011 074 346

## Beschreibung

Schaltungsanordnung mit einem Resonanzwandler und Verfahren zum Betreiben eines Resonanzwandlers
Die Erfindung betrifft eine Schaltungsanordnung mit einem Resonanzwandler, insbesondere zum kabellosen Laden eines Elektrofahrzeugs, sowie ein Verfahren zum Betreiben eines Resonanzwandlers.

Ein Resonanzwandler ist ein Gleichspannungswandler, welcher mit einem Schwingkreis arbeitet und eine Gleichspannung in eine ein- oder mehrphasige Wechselspannung wandelt. Sofern am Ausgang des Resonanzwandlers keine Gleichrichtung erfolgt, wird dieser auch als Inverter bezeichnet.

Einfache Bauformen von Invertern, welche jeweils mit einem Paar an Transistoren als Schaltelementen arbeiten, sind beispielsweise aus der US 2,783,384 A bekannt.

Aus der DE 10 2008 027 126 A1 ist ein Verfahren zum Betreiben eines Schwingkreises mit mindestens zwei elektronischen Schaltern bekannt. Der Schwingkreis, welcher innerhalb eines Resonanzwandlers gebildet ist, soll abgeschaltet werden, wenn während des Abschaltens oder nach dem Abschalten eines der Schalter ein Strom durch diesen Schalter einen vorgegebenen Schwellwert erreicht oder unterschreitet. Der Resonanzwandler dient der Leistungsübertragung zwischen einem Leistungsteil und einem galvanisch davon getrennten Verbraucherteil mittels eines Transformators, wobei Leistungsteil und Verbraucherteil Teil eines Haushaltsgerätesystems sein können. Als Beispiel ist in der DE 10 2008 027 126 A1 eine Kaffeemaschine genannt.

Aus der EP 0 820 653 B1 ist ein Traktionsbatterieladesystem mit induktiver Ankopplung bekannt. Hierbei wird Ladeenergie von einer Ladestation an ein Elektrofahrzeug als Wechselstrom im Bereich von 10 kHz bis zu 200 kHz übertragen und im Elektrofahrzeug gleichgerichtet. Das Traktionsbatterieladesystem soll insbesondere für Fahrzeuge geeignet sein, welche mit einem Batterieenergie-Managementsystem (BEMS) ausgerüstet sind. Ein bordinternes batteriespezifisches Ladesteuermodul, das im Elektrofahrzeug vorhanden ist, trifft Entscheidungen und schickt Signale bezüglich der Größe und des Zeitpunkts des Ladestroms an die Ladestation. Die Ladestation wird in der EP 0 820 653 B1 als universell in dem Sinne bezeichnet, dass eine Vielzahl verschiedener Elektrofahrzeuge anschließbar sein soll.

In der EP 2 079 144 A2 wird ein Energieübertragungskontrollgerät beschrieben, mit einer Schaltung, zur Steuerung der Energieübertragung bei einem kontaktlosen Energieübertragungssystem. Eine zusätzliche Fremdobjekterkennung ist möglich.

In der EP 1 432 097 A1 sind ein Ladegerät und ein Verfahren zum kontaktlosen Laden einer mobilen Einheit beschrieben. Das Ladegerät umfasst Überwachungsmittel, zur Messung einer Pulsdauer eines Stroms, welcher durch eine Primärinduktivität des Ladegeräts fließt.

In der JP 2006 230 032 A sind ein Energietransmitter und ein Energieübertragungsverfahren beschrieben.

In der EP 0 758 153 A2 ist eine Schalteinrichtung beschrieben, zur Stromlosschaltung eines Transformators. Wenn sekundärseitig keine Strombedarf besteht, wird der Transformator vom Versorgungsnetz abgetrennt und bei einem Strombedarf selbsttätig wieder eingeschaltet. Hierzu werden Spannungsunterschiede in einer primärseitigen Zusatzwicklung ausgewertet.

In der EP 1 962 403 A2 erden ein Energieübertragungskontrollgerät und ein kontaktloses Energieübertragungssystem beschrieben. Das Energieübertragungskontrollgerät umfasst eine Schaltung, welche Daten von einem Gerät detektiert, welches Energie empfängt. Beispielsweise wird eine Lastmodulation erkannt oder es erfolgt eine Fremdobjekterkennung oder eine Abkoppelerkennung.

Der Erfindung liegt die Aufgabe zugrunde, einen Resonanzwandler, welcher zum Einsatz in einem kabellosen Batterieladesystem, insbesondere für Elektrofahrzeuge, geeignet ist, besonders robust gegenüber möglichen Störungen während des Ladevorgangs zu gestalten.

Diese Aufgabe wird erfindungsgemäß gelöst durch einen Resonanzwandler mit den Merkmalen gemäß Anspruch 1, durch eine Verwendung mit den Merkmalen nach Anspruch 5 sowie durch ein Verfahren zum Betreiben eines Resonanzwandlers mit den Merkmalen gemäß Anspruch 7. Im Folgenden im Zusammenhang mit der Schaltungsanordnung erläuterte Ausgestaltungen und Vorteile gelten sinngemäß auch für das Verfahren und umgekehrt.

Die Schaltungsanordnung umfasst einen in eine primärseitige Wicklung eines Transformators Energie einspeisenden Resonanzwandler, sowie eine zu dessen Ansteuerung vorgesehene Ansteuerschaltung, welche mehrere Module aufweist, nämlich
- einen mit variabler Frequenz steuerbaren Frequenzgenerator,
- eine zum Schutz von Bauteilen des Resonanzwandlers ausgebildete Kurzschlussüberwachungseinheit, in die bevorzugt auch eine Resonanzfehlerüberwachungseinheit insbesondere zur Erkennung einer Unterresonanz integriert ist, sowie
- eine Leerlauferkennungseinheit, welche dazu ausgebildet ist, bei Leerlauf einer mit der primärseitigen Wicklung des Transformators zusammenwirkenden Sekundärseite ohne Rückmeldung von dieser Sekundärseite den Resonanzwandler abzuschalten. Die Sekundärseite ist in bevorzugter Ausgestaltung mechanisch mit der primärseitigen Wicklung nicht verbunden.

Die Erfindung geht von der Überlegung aus, dass sich während des kabellosen Ladens eines Akkumulators Parameter, welche für den Ladevorgang relevant sind, in nicht vorgesehener Weise ändern können. Dies gilt beispielsweise bei einer raschen Änderung der Position des zu ladenden Akkumulators in Relation zur Ladestation oder beim Einbringen von Material in einen Spalt zwischen der Ladestation und demjenigen Objekt, in dem sich der zu ladende Akkumulator befindet.

Der ideale Betrieb einer Ladestation, in welchem sich der zu ladende Akkumulator sowie eine im selben Objekt angeordnete sekundärseitige Wicklung in geometrisch exakt bestimmter Relation zur primärseitigen, das heißt Ladestation-seitigen Wicklung befinden, kann somit in der Praxis, insbesondere beim Laden von Elektrofahrzeugen, nur mit speziellen Sicherungsvorkehrungen gewährleistet werden. Solche Sicherungsvorkehrungen könnten zum Beispiel in Form von Fixierungsmechanismen, die Primär- und Sekundärseite des beim Ladevorgang verwendeten Transformators relativ zueinander in unveränderlicher Position halten, bereitgestellt werden.

Ein anderer Ansatz, Abweichungen vom bestimmungsgemäßen Ladevorgang zu vermeiden oder zumindest rechtzeitig zu detektieren, um Maßnahmen zur Vermeidung unzulässiger Betriebszustände einleiten zu können, liegt in einer permanenten Überwachung sekundärseitiger Betriebsparameter. Beim kabellosen Laden könnte zu diesem Zweck eine Funkverbindung zwischen der Sekundärseite und der Primärseite der gesamten, den Transformator sowie einen diesen mit Energie versorgenden Resonanzwandler umfassenden Anordnung aufgebaut werden. Eine solche Funkverbindung ließe sich mit Komponenten, welche in der Mobilfunktechnik weit verbreitet sind, in rationeller Weise herstellen.

Eine weitere Möglichkeit zum Schutz von sekundärseitigen Komponenten der den Transformator zur Energieübertragung nutzenden, das heißt induktiven, Ladevorrichtung vor Überlastung, insbesondere bei Leerlauf, ist grundsätzlich in Form einer permanenten sekundärseitigen Last zusätzlich zur zu ladenden Batterie gegeben. Auch bei dieser denkbaren Sicherungsmaßnahme wird somit eventuellen sekundärseitigen Betriebsstörungen während des Ladens mit ebenfalls sekundärseitigen Sicherungseinrichtungen begegnet.

Die Erfindung sieht dagegen eine primärseitige Überwachung des Ladevorgangs vor, was sich sowohl auf eine Kurzschlussüberwachung als auch auf eine Leerlaufüberwachung bezieht.

Die Kurzschlussüberwachung ist im einfachsten Fall ausschließlich zur Sperrung des Resonanzwandlers bei einem Kurzschluss im engsten Sinn ausgebildet. In komplexeren, bevorzugten Ausgestaltungen umfasst die Kurzschlussüberwachungseinheit mehrere, mit unterschiedlicher Trägheit auf Stromänderungen ansprechende, vorzugsweise unabhängig voneinander als Sicherheitseinrichtungen wirksame Module. Insbesondere ist zusätzlich zu einer sehr schnell reagierenden Kurzschlussüberwachungseinheit eine vergleichsweise träge, jedoch bereits bei kleineren Stromänderungen reagierende Resonanzfehlerüberwachungseinheit vorhanden, welche Fehlerzustände des Resonanzwandlers detektiert und diesen gegebenenfalls abschaltet. Die Überwachungseinheit ist daher insbesondere als Kurzschluss- und Resonanzfehlerüberwachungseinheit ausgebildet, nachfolgend kurz als Kurzschlussüberwachungseinheit bezeichnet.

Als drittes Modul, welches im weitesten Sinne der Kurzschlussüberwachungseinheit zugerechnet wird, ist optional eine Resonanztrenderkennungseinheit vorgesehen, welche im Vergleich zur Resonanzfehlerüberwachungseinheit mit nochmals verminderter Reaktionsgeschwindigkeit agiert, jedoch selbst ein langfristiges, schleichendes Abdriften von Betriebsparametern in die Überwachung einbezieht und gegebenenfalls eine Abschaltung des Resonanzwandlers auslöst.

Die in jedem Fall zusätzlich zur aus einem oder mehreren Modulen aufgebauten Kurzschlussüberwachungseinheit vorgesehene, primärseitig angeordnete Leerlauferkennungseinheit umfasst eine kaskadierte Sample- und Hold-Schaltung.

Die Sample- und Hold-Schaltung ist ausgangsseitig mit einem Eingang eines zur Ansteuerung des Resonanzwandlers vorgesehenen Controllers verbunden. Derselbe Controller steuert in vorteilhafter Ausführungsform auch den Frequenzgenerator an, welcher der Ansteuerschaltung zuzurechnen ist und den Resonanzwandler während des Ladevorgangs im überresonanten Betrieb hält. Im Fall eines detektierten, auf der Sekundärseite auftretenden Leerlaufs erfolgt die Detektion ausschließlich auf der Primärseite und damit galvanisch getrennt von den vom Leerlauf direkt betroffenen Bauteilen. Der Controller erhält hierbei von der Sample- und Hold-Schaltung ein analoges Eingangssignal und damit eine Maßzahl für ein Verhältnis zwischen einem Leerlaufbetrieb und einem Lastbetrieb. Über den Frequenzgenerator bzw. ein H-Brücken Ansteuersignal sorgt der Controller für eine Abschaltung des Resonanzwandlers. Der Controller weist hierzu eine eigene interne Schaltschwelle auf, die beispielsweise softwaretechnisch festgelegt ist. Auf diese Weise ist eine erste, Controller-abhängige Wirkkette der Leerlaufüberwachung realisiert.

Der Sample- und Hold-Schaltung sind ein Komparator sowie ein Flip-Flop, insbesondere ein RS-Flip-Flop, nachgeschaltet, wobei ein Referenzeingang des Komparators über einen einer PWM-Einheit (Pulsweiten-Modulations- Einheit) nachgeschalteten Filter mit dem Controller verbunden ist, während der zweite Eingang des Komparators mit dem Ausgang der kaskadierten Sample- und Hold-Schaltung verbunden ist. Eingänge des Flip-Flops sind hierbei zum einen an den Ausgang des Komparators und zum anderen an eine Reset-Schnittstelle des zur Ansteuerung des Resonanzwandlers vorgesehenen Controllers angeschlossen.

Ein Ausgang des Flip-Flops ist direkt mit einem Eingang eines zur Einspeisung von Leistung in die primärseitige Wicklung des Transformators vorgesehenen Gate-Treibers, welcher eine Komponente des Resonanzwandlers ist, verbunden. Auf diese Weise ist mittels des Flip-Flops eine vom Controller unabhängig auslösende Abschaltung des Resonanzwandlers ermöglicht. Zur Unterscheidung von der zuvor genannten Controllerabhängigen Wirkkette wird im Fall einer solchen Abschaltung über das Flip-Flop von einer Controller-unabhängigen Wirkkette gesprochen. Die das Flip-Flop umfassende Leerlauferkennungseinheit überwacht hierbei, nachdem sie einmalig mittels des Controllers parametriert wurde, selbsttätig den Leerlaufpunkt und arbeitet hierbei asynchron zum Controller. Anders ausgedrückt: Die verschiedenen Wirkketten der Leerlauferkennung unterscheiden sich hinsichtlich ihrer Taktung voneinander. Die Asynchronität bezieht sich in diesem Zusammenhang auf eine Arbeitsfrequenz einer leistungselektronischen Brückenschaltung des Resonanzwandlers im Verhältnis zur Arbeitsfrequenz des Controllers. Ein asynchrones Auslösen der Leerlaufdetektion mittels des Flip-Flops wäre außerdem auch bei einer eventuellen Fehlfunktion des Controllers gegeben.

In vorteilhafter Ausgestaltung ist ein weiterer Ausgang des Flip-Flops direkt mit dem zur Ansteuerung des Resonanzwandlers vorgesehenen Controller verbunden. Mit dieser Rückmeldung des Flip-Flops an den Controller ist eine Funktionskontrolle von Komponenten der Leerlauferkennungseinheit gegeben.

Selbst mit dieser Zusatzfunktion zeichnet sich die gesamte Schaltungsanordnung durch einen einfachen Aufbau, insbesondere den Entfall aufwändiger Sensorik zur Erkennung des Leerlauf-Betriebs, aus.

Das Verfahren zum Betreiben eines Resonanzwandlers, welcher in eine primärseitige Wicklung eines Transformators, insbesondere einer Ladestation zum kabellosen Laden eines elektrisch angetriebenen Fahrzeugs, Energie einspeist, umfasst in vorteilhafter Weise folgende Merkmale:
- Der Resonanzwandler wird im überresonanten Bereich betrieben und bevorzugt hinsichtlich Resonanzpunkt sowie Strom zur Vermeidung eines Unterresonanzbetriebes überwacht,
- die Ansteuerung des Resonanzwandlers erfolgt mittels eines Controllers,
- ein sekundärseitiger Leerlauf des Transformators wird primärseitig asynchron zum Controller überwacht, wobei bei Leerlaufdetektion eine Controller-unabhängige Abschaltung des Resonanzwandlers erfolgt.

Gemäß einer vorteilhaften Weiterbildung des Verfahrens erfolgt eine zusätzliche Leerlaufdetektion unter Einbeziehung des Controllers. Hierbei reagiert die den Controller nutzende Leerlaufdetektion vorzugsweise träger als die vom Controller unabhängige Leerlaufdetektion. Die vergleichsweise träge ansprechende Leerlauferkennung durch den Controller hat den Vorteil, dass auch bei langsam und sich stetig ändernder Last im Batterieladesystem, sofern dies zu einer Überlastung von Komponenten, insbesondere leistungselektronischen Elementen, führen könnte, der Resonanzwandler abgeschaltet bzw. in seiner Betriebsart verändert wird.

Die Leerlaufdetektion erfolgt vorzugsweise mit mindestens einer einstellbaren Schaltschwelle. Sofern mehrere Abschaltmechanismen, die bei Leerlauf oder anderen unzulässigen Laständerungen greifen, vorhanden sind, können in vorteilhafter Ausgestaltung unterschiedliche Parameter der Leerlaufdetektion unabhängig voneinander eingestellt werden, wobei der Begriff Leerlaufdetektion in einem weiten Sinne zu verstehen ist und auch langsame Laständerungen einschließt.

Zur schnell ansprechenden Leerlaufdetektion wird während jeder vollen Periode eines primärseitigen Stromsignals vorzugsweise mehrfach ein Strommesswert erfasst und zumindest in einem Teilzeitraum bis zur Erfassung des nächsten Strommesswertes stabil gehalten. Beispielsweise werden Strommesswerte zweifach während jeder vollen Periode des primärseitigen Stromsignals, insbesondere bei 90° und 270°, erfasst. Die Erfassung bei 90° und 270° hat den Vorteil, dass zu diesen Taktzeitpunkten der gesamte primärseitige Strom einschließlich Magnetisierungsstrom im bestimmungsgemäßen Ladebetrieb maximal oder zumindest nahe am Maximum ist, während zu denselben Taktzeitpunkten im Leerlauffall der Magnetisierungsstrom jeweils im Nulldurchgang ist und kein zusätzlicher Strom gegeben ist, so dass insgesamt der Leerlauffall sehr gut detektierbar ist.

Jeder Strommesswert, das heißt insbesondere sowohl der bei 90° als auch der bei 270° erfasste Strommesswert, wird in ein vorzugsweise analoges Ausgangssignal gewandelt, welches in besonders bevorzugter Weise mindestens solange konstant gehalten wird, bis der nächste Strommesswert erfasst wird. Somit liegt jedes derartige Ausgangssignal vorzugsweise unverändert über mindestens 180° an.

Nachfolgend wird ein Ausführungsbeispiel der Erfindung anhand einer Zeichnung näher erläutert. Hierin zeigen, teilweise in grober Vereinfachung:
- FIG 1: in einem Blockdiagramm ein Batterieladesystem zum kabellosen Laden einer Batterie mit einem Resonanzwandler,
- FIG 2: in einer vereinfachten Darstellung das Batterieladesystem nach FIG 1 mit veranschaulichtem Regelkreis,
- FIG 3: eine weitere vereinfachte Darstellung des Batterieladesystems nach FIG 1, wobei hier die zu detektierende Leerlaufsituation verdeutlicht ist,
- FIG 4: eine innerhalb des Batterieladesystems nach FIG 1 vorgesehene Schaltungsanordnung, welche den Resonanzwandler sowie eine Ansteuerschaltung zu dessen Ansteuerung umfasst, inklusive der Schutz- und Überwachungsmechanismen,
- FIG 5: die Schaltungsanordnung nach FIG 4 mit im Vergleich zu FIG 4 detaillierterer Darstellung eines Moduls, nämlich einer Leerlauferkennungseinheit,
- FIG 6: in Diagrammform Spannungs-, Strom- sowie SignalVerläufe im bestimmungsgemäßen Betrieb des Batterieladesystems nach FIG 1,
- FIG 7: in einer Darstellung analog FIG 6 den Leerlaufbetrieb des Batterieladesystems nach FIG 1.

Einander entsprechende Teile oder Parameter sind in allen Figuren mit den gleichen Bezugszeichen gekennzeichnet.

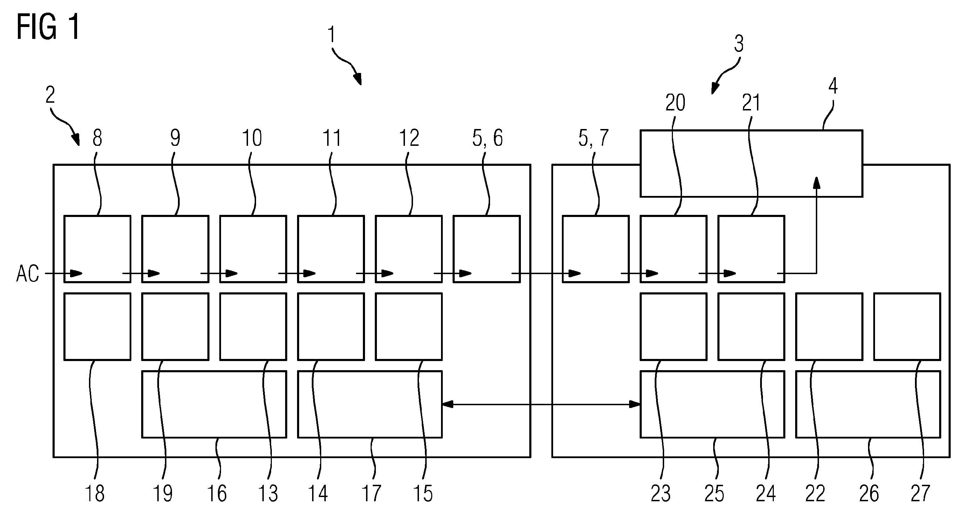

Ein insgesamt mit dem Bezugszeichen 1 gekennzeichnetes, in FIG 1 in Form eines Blockdiagramm dargestelltes Batterieladesystem 1 setzt sich zusammen aus einer Primärseite 2, welche ortsfest ist, und einer Sekundärseite 3, welche sich an Bord eines nicht weiter dargestellten Elektrofahrzeugs mit zu ladender Batterie 4 befindet.

Die Schnittstelle zwischen der Primärseite 2 und der Sekundärseite 3 ist gebildet durch einen Transformator 5 mit einer primärseitigen Wicklung 6, das heißt Primärspule, und einer sekundärseitigen Wicklung 7.

Die Primärseite 2 des Batterieladesystems 1 umfasst weiter einen Gleichrichter 8, einen Leistungsfaktorkorrekturfilter 9 (PFC = Power Factor Correction), einen Zwischenkreis 10 (DC-Link), sowie einen Verstärker 11, welcher elektrische Leistung einem Resonanzwandler 12 zuführt, der mit einem Schwingkreis arbeitet, dessen Resonanzfrequenz unter anderem von der Induktivität und der (Kompensations-)Kapazität der primärseitigen Wicklung 6 des Transformators 5 abhängt.

Der Resonanzwandler 12 arbeitet mit Frequenzen oberhalb von 50 kHz und wird angesteuert mit Hilfe eines Controllers 13, welcher sich ebenfalls auf der Primärseite 2 des Batterieladesystems 1 befindet. Der Controller 13 spielt eine wesentliche Rolle bei der Erkennung einer Leerlaufsituation, das heißt des plötzlichen unbeabsichtigten Abklemmens der Batterie 4, wie im Folgenden noch im Detail erläutert wird. Auf der Primärseite 2 sind weiterhin sind ein primärseitiger Stromsensor 14 sowie ein primärseitiger Spannungssensor 15 vorhanden. Eine Kommunikationseinheit 16 ist zum Austausch von Daten, etwa mit einem übergeordneten Controller, vorgesehen. Ein zusätzliches, Kommunikationselement 17 ist für Kalibrierungs- und Kontrollzwecke insbesondere in Zusammenarbeit mit einer entsprechenden Kommunikationseinheit 25 auf der Sekundärseite 3 verwendbar. Die Kommunikation erfolgt drahtlos, beispielsweise über WLAN. Weitere Komponenten der Primärseite 2 sind eine Spannungsversorgung 18 und eine Lüftersteuerung 19.

Auf der Sekundärseite 3 befinden sich, der sekundärseitigen Wicklung 7 nachgeschaltet, eine Kapazität 20 sowie ein Gleichrichter 21. Ähnlich wie die Primärseite 2 weist auch die Sekundärseite 3 einen Controller 22, einen Stromsensor 23, sowie einen Spannungssensor 24 auf. Analog zum primärseitigen Kommunikationselement 17 ist auf der Sekundärseite 3 das bereits erwähnte Kommunikationselement 25 insbesondere für die Kalibrierungs- und Kontrollzwecke vorgesehen. Statt einer Kommunikationseinheit 16 ist auf der Sekundärseite 3 ein in das Fahrzeug eingebautes Fahrzeugkommunikationselement 26 vorhanden. Anstelle einer eine Wechselspannung liefernden Spannungsversorgung 18, wie auf der Primärseite 2 vorgesehen, weist die Sekundärseite 3 lediglich eine Hilfsspannungsversorgung 27 auf.

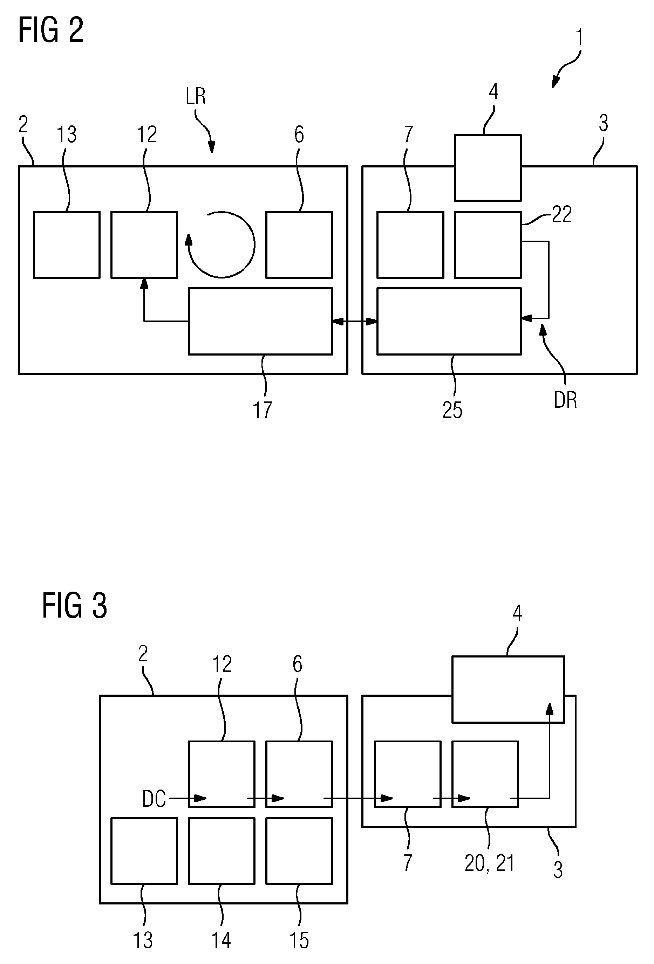

Grundzüge der Regelung des Batterieladesystems 1 sind in FIG 2 veranschaulicht, welche in vereinfachter Darstellung die Anordnung nach FIG 1 zeigt. Erkennbar ist ein primärseitiger Leistungsregelkreis RL. Eine Stromregelung auf der Sekundärseite 3 ist nicht vorgesehen. Eine Datenrückkopplung DR von der Sekundärseite 3 zur Primärseite 2 betrifft Kalibrierdaten, welche auf der Sekundärseite 3 zur Leistungskalibrierung des Batterieladesystems 1 erfasst werden. Aufgrund der relativ konstanten Batteriespannung ist hierdurch mittelbar eine Batteriestrom-Regelung ermöglicht und vorzugsweise auch verwirklicht.

In FIG 3 ist das Batterieladesystem 1 im Vergleich zu FIG 1 und FIG 2, insbesondere was die Sekundärseite 3 betrifft, nochmals vereinfacht dargestellt, wobei die Kapazität 20 und der sekundärseitige Gleichrichter 21 in diesem Fall als eine einzige Komponente visualisiert sind. Eine mögliche Leerlaufsituation ist in FIG 3 durch eine Unterbrechungslinie zwischen dem Gleichrichter 21 und der Batterie 4 skizziert.

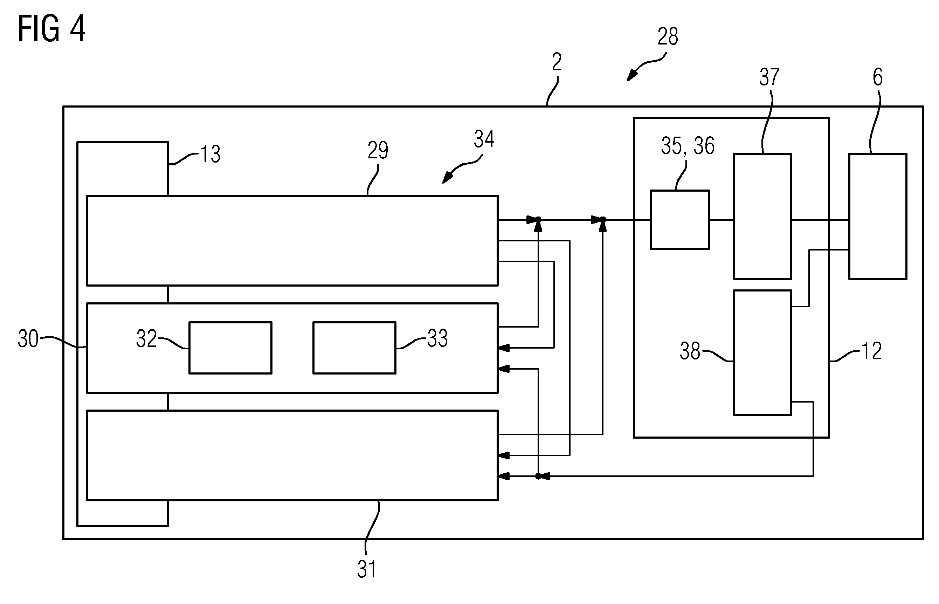

Die FIG 4 zeigt in größerer Detailliertheit einen Ausschnitt aus der Anordnung nach FIG 1, nämlich eine Schaltungsanordnung 28, welche den primärseitigen Controller 13 und den Resonanzwandler 12 umfasst. Der Controller 13 bildet zusammen mit drei Modulen 29,30,31, auf welche nachstehend noch näher eingegangen wird, eine Ansteuerschaltung 34 zur Ansteuerung des Resonanzwandlers 12. Der Resonanzwandler 12 umfasst eine Mehrzahl an Leistungselektronikkomponenten, nämlich Gate-Treiber 35,36, Gates einer H-Brücke 37 und Stromwandler 38.

Bei den einzelnen Modulen 29,30,31, welche mit dem Controller 13 zusammenwirken, handelt es sich um einen Frequenzgenerator 29, eine Kurzschluss- und Resonanzfehlerüberwachungseinheit 30, sowie eine Leerlauferkennungseinheit 31. Die Kurzschluss-und Resonanzfehlerüberwachungseinheit 30 wird nachfolgend vereinfacht als Kurzschlussüberwachungseinheit 30 bezeichnet.

Der Frequenzgenerator 29 (Dual Phase Frequency Generator) ist für den Betrieb des Resonanzwandlers 12 erforderlich und umfasst einen vom Controller 13 aus gesteuerten, digital oder analog aufgebauten, in der Frequenz steuerbaren Generator, welcher als spannungsgesteuerter Oszillator (VCO = voltage controlled oscillator) oder als digitaler Frequenzteiler ausgebildet ist, auf. Die Frequenz des Frequenzgenerators 29 ist in hinreichend feinen Intervallen steuer- und regelbar, um zuverlässig einen unterresonanten Betrieb des Resonanzwandlers 12 bei einer Änderung der Frequenz verhindern zu können.

Die Kurzschlussüberwachungseinheit 30 dient der Überwachung des durch Komponenten des Resonanzwandlers 12 fließenden Stromes auf Kurzschluss. Die Kurzschlussüberwachungseinheit 30 ist als schnell auf Kurzschluss ansprechendes Modul ausgebildet und schließt zwei weitere, relativ träge Module, nämlich eine Resonanzfehlerüberwachungseinheit 32und eine Resonanztrenderkennungseinheit 33, ein, so dass insgesamt eine dreifache Absicherung gegen Kurzschluss oder mittel- beziehungsweise langfristige, Komponenten des Batterieladesystems 1 potentiell schädigende Stromänderungen gegeben ist.

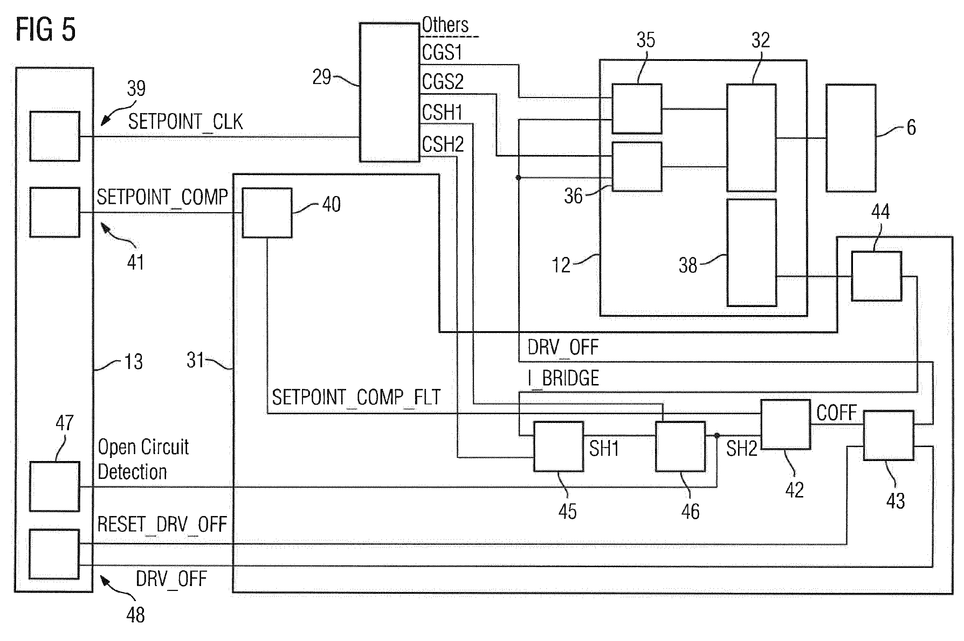

Die Leerlauferkennungseinheit 31 wird im Folgenden anhand FIG 5 näher erläutert. Während der Frequenzgenerator 29, welcher einen Taktgenerator einschließt, an einen Taktanschluss 39 des Controllers 13 angeschlossen (in FIG 5 im Vergleich zu FIG 4 verkleinert eingezeichnet) ist, sind die Kurzschlussüberwachungseinheit 30 und ihre einzelnen Module 32,33 in FIG 5 nicht dargestellt.

Als Einzelheiten der Leerlauferkennungseinheit 31 sind in FIG 5 ein Filter 40, angeschlossen an einen PWM-Anschluss 41 des Controllers 13, ein Komparator 42, ein RS-Flip-Flop 43, sowie ein weiterer Filter 44, welcher elektrisch mit dem Stromwandler 38 verbunden ist, erkennbar. Weiter weist die Leerlauferkennungseinheit 31, wie aus FIG 5 hervorgeht, eine kaskadierte Sample&Hold-Schaltung 45,46 auf.

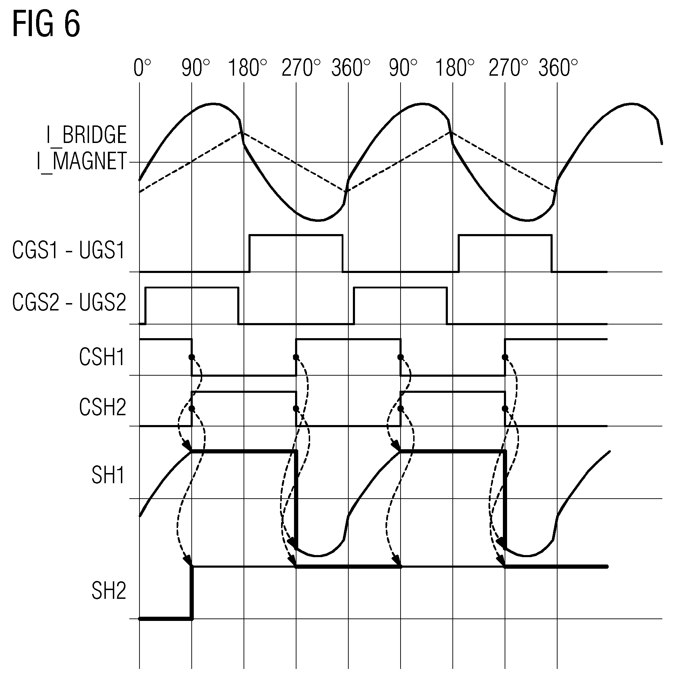

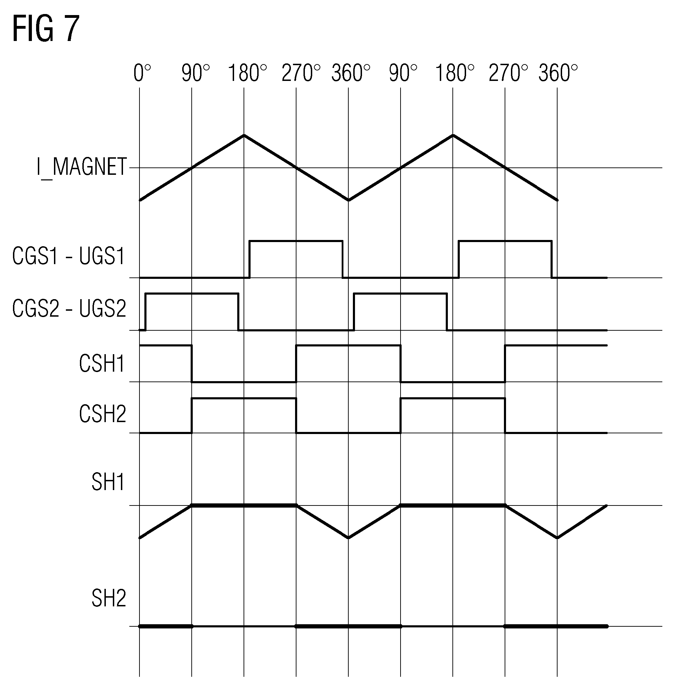

Eingangsseitig ist die Sample&Hold-Schaltung 45,46 mit dem Filter 44 sowie mit dem Frequenzgenerator 29 verbunden. Am Ausgang der kaskadierten Sample&Hold-Schaltung 45,46 steht ein Signal SH2 zur Verfügung, welches an den Eingang eines Analog-Digital-Wandlers (ADC) 47 des Controllers 13 gelegt wird. Mit Hilfe des durch den Analog-Digital-Wandler 47 digitalisierten Signals nimmt der Controller 13 eine Auswertung vor, die eine eventuelle Leerlaufsituation des Batterieladesystems 1 erkennt, wie anhand der FIG 6 und 7 noch näher beschrieben wird. Bei detektiertem Leerlauf stoppt der Controller 13 durch ein entsprechendes an den Frequenzgenerator 29 bzw. an die Gates der H-Brücke 37 ausgegebenes Signal die Einspeisung von Energie in die primärseitige Wicklung 6 des Transformators 5. Dieser Signalfluss stellt eine erste, Controller-abhängige Wirkkette der Leerlauferkennung dar.

Eine weitere, Controller-unabhängige Wirkkette der Abschaltung des Batterieladesystems 1 bei Leerlauf ist dadurch aufgebaut, dass das Ausgangssignal SH2 der Sample&Hold-Schaltung 45,46 über den Komparator 42 dem RS-Flip-Flop 43 zugeführt wird. An den Referenzeingang des Komparators 42 ist hierbei ein gefiltertes Referenzsignal SETPOINT_COMP_FLT einer Pulsweitenmodulation gelegt, welches mittels des Filters 40 aus einem vom Controller 13 gelieferten ungefilterten Referenzsignal SETPOINT_COMP gewonnen wird. Die Abschaltung des Resonanzwandlers bei Leerlauf wird in diesem Fall durch ein direkt vom RS-Flip-Flop 43 an den Resonanzwandler 12 geleitetes Signal bewirkt und kommt insbesondere dann zum Tragen, wenn die erste, den Controller 13 einbeziehende Wirkkette nicht oder nicht schnell genug wirkt.

Zusätzlich ist ein Ausgang des RS-Flip-Flops 43 mit einer Schnittstelle 48 (GPIO = General Purpose Input/Output) des Controllers 13 verbunden. Mit dieser Rückmeldung des RS-Flip-Flops 43 an den Controller 13 ist eine ergänzende Kontrollfunktion gegeben. Die Schnittstelle 48 ist darüber hinaus auch zur Rücksetzung des RS-Flip-Flops 43 nutzbar und deshalb als Reset-Schnittstelle bezeichnet.

Das am Ausgang der Sample&Hold-Schaltung 45,46 anliegende Signal SH2 wird zu definierten Zeitpunkten während des Taktzyklus ermittelt. Um den Leerlauf des Transformators 5, bei welchem nur ein Magnetisierungsstrom auftritt, bestmöglich vom Lastfall, in dem zusätzlich ein Laststrom gegeben ist, unterscheiden zu können, wird die Strommessung, welche das Signal SH2 liefert, bei 90° und 270° durchgeführt. Eine Messung am Ende des Taktzyklus des Frequenzgenerators 29, das heißt bei 360°, würde dagegen kein für die Unterscheidung zwischen Last- und Leerlauffall nutzbares Signal liefern.

Zur weiteren Erläuterung der im Rahmen der Leerlaufdetektion durchgeführten Messungen wird im Folgenden auf die FIG 6 und 7 verwiesen.

Die FIG 6 bezieht sich auf den regulären Betrieb, das heißt Ladebetrieb, des Resonanzwandlers 12. Der im Resonanzwandler 12 fließende Gesamtstrom I_BRIDGE schließt einen Magnetisierungsstrom I_MAGNET ein, welcher nicht separat messbar und im obersten Diagramm in FIG 6 in Form einer gestrichelten Linie skizziert ist. Die in FIG 6 unterhalb des Stromverlaufs eingezeichneten Verläufe von CGS1, CGS2, CSH1 und CSH2 betreffen Ausgangssignale des Frequenzgenerators 29. Weiterhin ist in FIG 6 der Verlauf eines innerhalb der Sample&Hold-Schaltung 45,46 übertragenen Zwischensignals SH1 sowie der Verlauf des bereits erwähnten Ausgangssignals SH2 dargestellt.

Das Zwischensignals SH1 wird zu den Taktzeitpunkten 90° und 270°, zu welchen der Gesamtstrom I_BRIDGE jeweils sehr signifikant ungleich Null, nämlich nahe seines absoluten Maximums beziehungsweise Minimums, ist, ermittelt. Hierbei folgt der Verlauf von SH1 bis 90° dem Verlauf des Gesamtstroms I_BRIDGE und wird zu diesem Zeitpunkt eingefroren. Zum Taktzeitpunkt 270° wird das bis zu diesem Zeitpunkt konstant gehaltene Zwischensignal SH1 durch den aktuellen, negativen Wert von I_BRIDGE ersetzt, welcher wiederum konstant gehalten wird. Das Zwischensignal SH1 klappt somit, ausgelöst durch die taktgesteuerte Messung, wie in FIG 6 durch geschwungene, gestrichelte Linien zwischen verschiedenen Teile des Diagramms angedeutet ist, fortlaufend nach jeweils einer halben Taktlänge zwischen einem positiven und einem negativen Wert um. Solange sich das Zwischensignal SH1, wie hierbei gegeben, von Null unterscheidet, wird das Ausgangssignal SH2 im positiven Bereich gehalten, wie aus dem untersten Abschnitt von FIG 6 ersichtlich ist.

Dieser positive Wert des Ausgangssignals SH2 wird permanent dem Komparator 42, wie anhand FIG 5 bereits erläutert, zur Verfügung gestellt. Die in FIG 5 dargestellte Schaltung kann beispielsweise in einem CPLD (Complex Programmable Logic Device) integriert sein. Mindestens eine Schaltschwelle der Leerlauferkennungseinheit 31 kann hierbei parametrierbar sein, womit eine Abschaltung des Resonanzwandlers 12 auslösbar ist.

In FIG 7, welche im Gegensatz zu FIG 6 den Leerlauffall veranschaulicht, ist deutlich der Entfall des über den Magnetisierungsstrom I_MAGNET hinausgehenden Gesamtstroms I_BRIDGE und der hieraus resultierende Effekt auf das Zwischensignal SH1 sowie das Ausgangssignal SH2 erkennbar. Während das Zwischensignal SH1 zu keinem Taktzeitpunkt den positiven Bereich erreicht, bleibt das Ausgangssignal SH2 konstant bei Null. Der durch die Leerlauferkennungseinheit 31 detektierbare Unterschied zum regulären Ladebetrieb (FIG 6) ist somit äußerst signifikant. Während des Anlaufens des Resonanzwandlers 1 wird das Ausgangssignal SH2 bis zum Erreichen eines stabilen Betriebszustandes noch nicht durch den Controller 13 bewertet bzw. als Voraussetzung dazu die Schaltschwelle eines Komparators des Controllers 13 zur Festlegung eines Schaltkriteriums in Abhängigkeit des dem Controller 13 bereitgestellten Eingangssignals eingestellt.

Insgesamt stellt der Resonanzwandler 12 stabile, diversitär arbeitende Sicherungsmechanismen gegen unzulässige Betriebszustände, sowohl was zu hohe Ströme, insbesondere Kurzschlussströme, als auch einen Leerlauf auf der Sekundärseite des Transformators 5 betrifft, zur Verfügung ohne hierzu Messsignale auf der Sekundärseite zu messen bzw. auf solche zurückzugreifen.

## Patentansprüche

1. Schaltungsanordnung (28) insbesondere für ein kabelloses Batterieladesystem (1) vorzugsweise eines Elektrofahrzeugs, umfassend einen in eine primärseitige Wicklung eines Transformators (5) Energie einspeisenden Resonanzwandler (12), sowie eine zu dessen Ansteuerung vorgesehene Ansteuerschaltung (34), welche mehrere Module (29,30,31), nämlich
- einen mit variabler Frequenz steuerbaren Frequenzgenerator (29),
- eine zum Schutz von Bauteilen des Resonanzwandlers ausgebildete Kurzschlussüberwachungseinheit (30),
- eine Leerlauferkennungseinheit (31)
aufweist, wobei
die Leerlauferkennungseinheit (31) dazu ausgebildet ist, bei Leerlauf einer mit der primärseitigen Wicklung (6) des Transformators (5) zusammenwirkenden Sekundärseite (3) ohne Rückmeldung von der Sekundärseite (3) den Resonanzwandler (12) abzuschalten,
**dadurch gekennzeichnet, dass** die Leerlauferkennungseinheit (31) mehrere, sich hinsichtlich ihrer Taktung voneinander unterscheidende Wirkketten umfasst, wobei eine erste Wirkkette eine kaskadierte Sample- und Hold-Schaltung (45,46) aufweist, die ausgangsseitig mit einem Eingang eines zur Ansteuerung des Resonanzwandlers (12) vorgesehenen Controllers (13) verbunden und dazu ausgebildet ist, dem Controller (13) eine Maßzahl für ein Verhältnis zwischen einem Leerlaufbetrieb und einem Lastbetrieb als analoges Eingangssignal zuzuführen, und eine zweite Wirkkette einen Komparator (42) sowie ein Flip-Flop (43) aufweist, wobei Komparator (42) und Flip-Flop (43) der Sample- und Hold-Schaltung (45,46) nachgeschaltet sind und ein Ausgang des Flip-Flops (43) direkt mit einem Eingang eines zur Einspeisung von Leistung in die primärseitige Wicklung (6) des Transformators (5) vorgesehenen Gate-Treibers (35,36) verbunden ist.

2. Schaltungsanordnung (28) nach Anspruch 1, **dadurch gekennzeichnet, dass** das Flip-Flop (43) als RS-Flip-Flop ausgebildet ist.

3. Schaltungsanordnung (28) nach Anspruch 1 oder 2, **dadurch gekennzeichnet, dass** ein weiterer Ausgang des Flip-Flops (43) direkt mit dem zur Ansteuerung des Resonanzwandlers (12) vorgesehenen Controller (13) verbunden ist.

4. Schaltungsanordnung (28) nach einem der Ansprüche 1 bis 3, **dadurch gekennzeichnet, dass** ein Eingang des Flip-Flops (43) mit einer Schnittstelle (48) des zur Ansteuerung des Resonanzwandlers (12) vorgesehenen Controllers (13) verbunden ist.

5. Verwendung einer Schaltungsanordnung (28) nach Anspruch 1 in einem kabellosen Batterieladesystem (1), insbesondere einem Batterieladesystem eines Elektrofahrzeugs.

6. Verwendung nach Anspruch 5, wobei die primärseitige Wicklung (6) des Transformators (5) in einer ortsfesten Ladestation und eine zugehörige sekundärseitige Wicklung (7) in einem Fahrzeug mit zu ladender Batterie (4) angeordnet sind.

7. Verfahren zum Betreiben eines Resonanzwandlers (12), welcher in eine primärseitige Wicklung eines Transformators (5) Energie einspeist, mit folgenden Merkmalen:
- Der Resonanzwandler (12) wird im überresonanten Bereich betrieben,
- die Ansteuerung des Resonanzwandlers (12) erfolgt mittels eines Controllers (13),
- ein sekundärseitiger Leerlauf des Transformators (5) wird mittels mehrerer, sich hinsichtlich ihrer Taktung voneinander unterscheidender Wirkketten überwacht, nämlich
mittels einer ersten Wirkkette, welche eine kaskadierte Sample- und Hold-Schaltung (45,46) aufweist, die ausgangsseitig mit einem Eingang des zur Ansteuerung des Resonanzwandlers (12) vorgesehenen Controllers (13) verbunden ist und dem Controller (13)
- eine Maßzahl für ein Verhältnis zwischen einem Leerlaufbetrieb und einem Lastbetrieb als analoges Eingangssignal zuführt,
- sowie mittels einer zweiten, von der Arbeitsfrequenz des Controllers (13) unabhängigen Wirkkette, welche einen Komparator (42) sowie ein Flip-Flop (43), aufweist, wobei Komparator (42) und Flip-Flop (43) der Sample- und Hold-Schaltung (45,46) nachgeschaltet sind und ein Ausgangssignal des Flip-Flops (43) direkt einem Eingang eines zur Einspeisung von Leistung in die primärseitige Wicklung (6) des Transformators (5) vorgesehenen Gate-Treibers (35,36) zugeführt wird.

8. Verfahren nach Anspruch 7, **dadurch gekennzeichnet, dass** die Leerlaufdetektion über die erste Wirkkette träger als die Leerlaufdetektion über die zweite Wirkkette erfolgt.

9. Verfahren nach Anspruch 7 oder 8, **dadurch gekennzeichnet, dass** die Leerlaufdetektion mit mindestens einer einstellbare Schaltschwelle erfolgt.

10. Verfahren nach einem der Ansprüche 7 bis 9, **dadurch gekennzeichnet, dass** zur Leerlaufdetektion während jeder vollen Periode eines primärseitigen Stromsignals (I_BRIDGE) mehrfach ein Strommesswert erfasst und hieraus ein Signal (SH1,SH2) generiert wird, welches zumindest in einem
Teilzeitraum bis zur Erfassung des nächsten Strommesswertes stabil gehalten wird.

11. Verfahren nach Anspruch 10, **dadurch gekennzeichnet, dass** Strommesswerte zweifach während jeder vollen Periode des primärseitigen Stromsignals (I_BRIDGE), insbesondere bei 90° und 270°, erfasst und hieraus ein Zwischensignal (SH1) sowie ein Ausgangssignal (SH2) generiert werden.

12. Verfahren nach Anspruch 11, **dadurch gekennzeichnet, dass** das aus dem Strommesswert (I_BRIDGE) generierte Ausgangssignal (SH2) zumindest solange konstant gehalten wird, bis der nächste Strommesswert (I_BRIDGE) erfasst wird.

## Claims

1. Circuit arrangement (28) in particular for a wireless battery charging system (1) preferably of an electric vehicle, comprising a resonant converter (12) feeding energy into a primary winding of a transformer (5), and a control circuit (34) for controlling said resonant converter and having a plurality of modules (29,30,31), namely
- a frequency generator (29) controllable with variable frequency,
- a short-circuit monitoring unit (30) designed to protect components of the resonant converter,
- an open circuit detection unit (31),
wherein
the open circuit detection unit (31) is designed to shut down the resonant converter (12) if a secondary side (3) interacting with the primary winding (6) of the transformer (5) is open circuit, without feedback from the secondary side (3),
**characterised in that** the open circuit detection unit (31) comprises a plurality of chains of effect which differ in respect of their timing, wherein a first chain of effect has a cascaded sample-and-hold circuit (45,46) which is connected on the output side to an input of a controller (13) provided for controlling the resonant converter (12) and is designed to feed the controller (13) a measured value for a relationship between open circuit operation and operation under load as an analogue input signal, and a second chain of effect has a comparator (42) and a flip-flop (43), wherein comparator (42) and flip-flop (43) are connected downstream of the sample-and-hold circuit (45,46) and an output of the flip-flop (43) is directly connected to an input of a gate driver (35,36) provided for injecting power into the primary winding (6) of the transformer (5).

2. Circuit arrangement (28) according to claim 1, **characterised in that** the flip-flop (43) is implemented as an RS flip-flop.

3. Circuit arrangement (28) according to claim 1 or 2, **characterised in that** another output of the flip-flop (43) is directly connected to the controller (13) provided for controlling the resonant converter (12).

4. Circuit arrangement (28) according to one of claims 1 to 3, **characterised in that** an input of the flip-flop (43) is connected to an interface (48) of the controller (13) provided for controlling the resonant converter (12).

5. Use of a circuit arrangement (28) according to claim 1 in a wireless battery charging system (1), in particular a battery charging system of an electric vehicle.

6. Use according to claim 5, wherein the primary winding (6) of the transformer (5) is disposed in a fixed charging station, and an associated secondary winding (7) is disposed in a vehicle having a battery (4) under charge.

7. Method for operating a resonant converter (12) which feeds energy into a primary winding of a transformer (5), having the following features:
- the resonant converter (12) is operated in the aboveresonance region,
- the resonant converter (12) is controlled by means of a controller (13),
- a secondary-side open circuit condition of the transformer (5) is monitored by means of a plurality of chains of effect which differ in respect of their timing, namely by means of a first chain of effect which has a cascaded sample-and-hold circuit (45,46) which is connected on the output side to an input of a controller (13) provided for controlling the resonant converter (12) and the controller (13) is fed
- a measured value for a relationship between open circuit operation and operation under load as an analogue input signal,
- and by means of a second chain of effect which is independent of the operating frequency of the controller (13), said chain of effect having a comparator (42) and a flip-flop (43), wherein comparator (42) and flip-flop (43) are connected downstream of the sample-and-hold circuit (45,46) and an output signal of the flip-flop (43) is directly connected to an input of a gate driver (35,36) provided for injecting power into the primary winding (6) of the transformer (5).

8. Method according to claim 7, **characterised in that** open circuit detection via the first chain of effect takes place more slowly than open circuit detection via the second chain of effect.

9. Method according to claim 7 or 8, **characterised in that** open circuit detection takes place using at least one settable switching threshold.

10. Method according to one of claims 7 to 9, **characterised in that** for open circuit detection a plurality of current measurements are acquired during each complete period of a primary current signal (I_BRIDGE) and a signal (SH1,SH2) is generated therefrom which is maintained stable at least for a part-period until acquisition of the next current measurement.

11. Method according to claim 10, **characterised in that** current measurements are acquired twice during each complete period of the primary-side current signal (I_BRIDGE), in particular at 90° and 270°, and an intermediate signal (SH1) and an output signal (SH2) are generated therefrom.

12. Method according to claim 11, **characterised in that** the output signal (SH2) generated from the current measurement (I_BRIDGE) is maintained constant at least until the next current measurement (I_BRIDGE) is acquired.

## Revendications

1. Montage (28) notamment pour un système (1) sans câble de charge d'une batterie, de préférence d'un véhicule électrique, comprenant un convertisseur (12) résonant alimentant en énergie un enroulement du côté primaire d'un transformateur (5) ainsi qu'un circuit (34) d'excitation prévu pour son excitation et ayant plusieurs modules (29, 30, 31), à savoir
- un générateur (29) de fréquence pouvant être commandé à une fréquence variable,
- une unité (30) de contrôle de court-circuit constituée pour la protection de composants du convertisseur résonant,
- une unité (31) de détection de marche à vide, dans lequel l'unité (31) de détection de marche à vide est constituée pour, lors de la marche à vide d'un côté (3) secondaire coopérant avec l'enroulement (6) primaire du transformateur (5), déconnecter, sans information en retour du côté (3) secondaire, le convertisseur (12) résonant,
**caractérisé en ce qu'**une unité (31) de détection de marche à vide comprend plusieurs chaînes actives se distinguant les unes des autres par leur cadencement, la première chaîne active ayant un circuit (45, 46) sample et hold en cascade qui est relié, du côté de la sortie, à une entrée d'une unité (13) de commande prévue pour exciter le convertisseur (12) résonant et qui est constituée pour envoyer à l'unité (13) de commande, comme signal d'entrée analogique, un indice d'un rapport entre un fonctionnement en marche à vide et un fonctionnement en charge et une deuxième chaîne active a un comparateur (42) ainsi qu'une bascule (43), le comparateur (42) et la bascule (43) étant montés en aval du circuit (45, 46) sample et hold et une sortie de la bascule (43) est reliée directement à une entrée d'un étage (35, 36) d'attaque de grille prévue pour alimenter en puissance l'enroulement (6) du côté secondaire du transformateur (5)

2. Montage (28) suivant la revendication 1, **caractérisé en ce que** la bascule (43) est constituée en bascule RS.

3. Montage (28) suivant la revendication 1 ou 2, **caractérisé en ce qu'**une autre sortie de la bascule (43) est reliée directement à l'unité (13) de contrôle prévue pour l'excitation du convertisseur (12) résonant.

4. Montage (28) suivant l'une des revendications 1 à 3, **caractérisé en ce qu'**une autre sortie de la bascule (43) est reliée à une interface (48) de l'unité (13) de commande prévue pour l'excitation du convertisseur (12) résonant.

5. Utilisation d'un montage (28) suivant la revendication 1 dans un système (1) sans câble de charge de batterie, notamment dans un système de charge de batterie d'un véhicule électrique.

6. Utilisation d'un montage (28) suivant la revendication 5, dans laquelle l'enroulement (6) du côté primaire du transformateur (5) est disposé dans un poste de charge fixe, et un enroulement (7) associé du côté secondaire, dans un véhicule ayant une batterie (4) à charger.

7. Procédé pour faire fonctionner un convertisseur (12) résonant qui alimente en énergie un enroulement du côté primaire d'un transformateur (5) ayant les caractéristiques suivantes :
- on fait fonctionner le convertisseur (12) résonant dans la plage de surrésonance,
- l'excitation du convertisseur (12) résonant s'effectue au moyen d'une unité (13) de commande,
- on contrôle une marche à vide du côté secondaire du transformateur (5) au moyen de plusieurs chaînes actives se distinguant les unes des autres par leur cadencement à savoir, au moyen d'une première chaîne active qui est un circuit (45, 46) sample et hold en cascade qui est relié, du côté de la sortie, à une entrée de l'unité (13) de commande prévue pour l'excitation du convertisseur (12) résonant et il est envoyé à une unité (13) de commande,
- comme signal d'entrée analogique, un indice d'un rapport entre un fonctionnement en marche à vide et un fonctionnement en charge,
- ainsi qu'au moyen d'une deuxième chaîne active, indépendante de la fréquence de travail de l'unité (13) de commande et ayant un comparateur (42) ainsi qu'une bascule (43), le comparateur (42) et la bascule (43) étant montés en aval du circuit (45, 46) sample et hold et signal de sortie de la bascule (43) est envoyé directement à une entrée d'un étage (35, 36) d'attaque de grille prévu pour alimenter en puissance l'enroulement (6) du côté secondaire du transformateur (5).

8. Procédé suivant la revendication 7, **caractérisé en ce que** la détection de la marche à vide par la première chaîne active s'effectue avec plus d'inertie que la détection de la marche à vide par la deuxième chaîne active.

9. Procédé suivant la revendication 7 ou 8, **caractérisé en ce que** la détection de la marche à vide s'effectue avec au moins un seuil de commutation réglable.

10. Procédé suivant l'une des revendications 7 à 9, **caractérisé en ce que**, pour la détection de la marche à vide pendant chaque période complète d'un signal (I_BRIDGE) de courant du côté primaire, on détecte plusieurs fois une valeur de mesure du courant et on en produit un signal (SH1, SH2) qui est maintenu, de manière stable, au moins dans un laps de temps partiel, jusqu'à la détection de la valeur de mesure du courant suivante.

11. Procédé suivant la revendication 10, **caractérisé en ce que** l'on détecte des valeurs de mesure du courant deux fois pendant chaque période complète du signal (I_BRIDGE) de courant du côté primaire, notamment à 90° et à 270°, et on en produit un signal (SH1) intermédiaire ainsi qu'un signal (SH2) de sortie.

12. Procédé suivant la revendication 11, **caractérisé en ce que** l'on maintient constant le signal (SH2) de sortie produit à partir de la valeur (I_BRIDGE) de mesure du courant au moins jusqu'à la détection de la valeur (I_BRIDGE) de mesure du courant suivante.
